# EUROPÄISCHE PATENTSCHRIFT

(11) **EP 4 408 650 B1**
(45) Veröffentlichungstag und Bekanntmachung des Hinweises auf die Patenterteilung: **03.09.2025**
(21) Anmeldenummer: 22786283.6
(22) Anmeldetag: 23.09.2022
(51) Int. Cl.: B29D 30/08

(54) **PRÜFSYSTEM UND VERFAHREN ZUM ÜBERPRÜFEN EINES AUF EINER REIFENAUFBAUTROMMEL POSITIONIERTEN MATERIALSTREIFENS**
CHECKING SYSTEM AND METHOD FOR CHECKING A MATERIAL STRIP POSITIONED ON A TYRE-BUILDING DRUM
SYSTÈME ET PROCÉDÉ DE CONTRÔLE D'UNE BANDE DE MATÉRIAU POSITIONNÉE SUR UN TAMBOUR DE FABRICATION DE PNEUS

(30) Priorität: 01.10.2021 DE 102021211066
(43) Veröffentlichungstag der Anmeldung: 07.08.2024
(73) Patentinhaber: Continental Reifen Deutschland GmbH, 30175 Hannover (DE)
(72) Erfinder: GLYNSKA, Jelena, 30175 Hannover (DE); BROERMANN, Eric, 30175 Hannover (DE); BELLOK, Jannis Tore, 30175 Hannover (DE)
(74) Vertreter: Continental Corporation
(86) Internationale Anmeldenummer: PCT/DE2022/200223
(87) Internationale Veröffentlichungsnummer: WO 2023/051883

(56) Entgegenhaltungen:
- DE-A1- 102019 110 721
- DE-A1- 102019 211 023

## Beschreibung

Die Erfindung betrifft ein Prüfsystem zum Überprüfen eines auf einer Reifenaufbautrommel positionierten Materialstreifens, mit einer Bildaufnahmeeinrichtung, welche dazu eingerichtet ist, zumindest eine Bildaufnahme eines auf einer Reifenaufbautrommel positionierten Materialstreifens zu erzeugen, und einer elektronischen Datenverarbeitungseinrichtung, welche dazu eingerichtet ist, auf Grundlage der von der Bildaufnahmeeinrichtung erzeugten Bildaufnahme zumindest eine Eigenschaft des auf der Reifenaufbautrommel positionierten Materialstreifens zu ermitteln.

Ferner betrifft die Erfindung eine Reifenbaumaschine mit einer Reifenaufbautrommel, auf welcher Materialstreifen zum Aufbau eines Reifenteils, insbesondere zum Aufbau einer Reifenkarkasse oder eines Gürtelpakets, positionierbar sind, und einem Prüfsystem zum Überprüfen der auf der Reifenaufbautrommel positionierten Materialstreifen.

Darüber hinaus betrifft die Erfindung ein Verfahren zum Überprüfen eines auf einer Reifenaufbautrommel einer Reifenbaumaschine positionierten Materialstreifens mittels eines Prüfsystems, mit den Schritten: Erzeugen zumindest einer Bildaufnahme eines auf einer Reifenaufbautrommel positionierten Materialstreifens mittels einer Bildaufnahmeeinrichtung des Bildsystems, und Ermitteln zumindest einer Eigenschaft des auf der Reifenaufbautrommel positionierten Materialstreifens auf Grundlage der von der Bildaufnahmeeinrichtung erzeugten Bildaufnahme mittels einer elektronischen Datenverarbeitungseinrichtung des Prüfsystems.

Während der Reifenherstellung werden verschiedene Materiallagen in Form von Materialstreifen auf einer Reifenaufbautrommel positioniert. Im Reifenbauprozess ist es üblich, die Reifenkarkasse und das Gürtelpaket des Reifens auf unterschiedlichen Reifenaufbautrommel herzustellen. Bei der Herstellung der Reifenkarkasse werden beispielsweise eine Innenschicht, eine Textil-Cord-Einlage, ein Umschlag und Seitenstreifen als Materialstreifen auf der Reifenaufbautrommel positioniert. Bei der Herstellung des Gürtelpakets werden ein oder mehrere Stahl-Cord-Gürtellagen, eine Spulbandage und der Laufstreifen als Materialstreifen auf der Reifenaufbautrommel positioniert.

Bei der automatisierten oder teilautomatisierten Reifenherstellung ist es erforderlich, dass sämtliche Materiallagen sowie der Kantenverlauf der einzelnen Materiallagen nach der Positionierung der jeweiligen Materiallage auf der Reifenaufbautrommel mittels eines Prüfsystems detektiert werden, bevor die nächste Fertigungssequenz eingeleitet wird. Die Materiallagenerfassung erfolgt bei den bekannten Prüfsystemen in einem Detektionsmodus des Prüfsystems, wobei die Kantenerfassung in einem Messmodus des Prüfsystems erfolgt.

Die DE 102019211023 A1 betrifft ein Verfahren zur Vermessung einer offenen oder einer überlappenden Verbindungsstelle einer Materiallage bei der Fertigung eines Reifenrohlings in einer Reifenaufbaumaschine. Die DE 102019110721 A1 betrifft einen Workflow für Annotationen für Trainingsdatensätze und insbesondere auf ein Computer-implementiertes Verfahren für zur Erweiterung eines Trainingsdatensatzes für Machine-Learning, sowie ein entsprechendes Workflow-System.

Es hat sich gezeigt, dass die bekannten Prüfsysteme mit den teilweise stark voneinander abweichenden Randbedingungen in den unterschiedlichen Fertigungsstätten noch nicht ausreichend sicher umgehen können, sodass häufig manuelle Eingriffe in den Herstellungsprozess erforderlich sind. In den Fertigungsstätten können sich beispielsweise die Lichtverhältnisse, die Trommelbeschaffenheit, die Materialbeschaffenheit der einzelnen Materiallagen und/oder das Maschinendesign der Reifenbaumaschine voneinander unterscheiden. Hinsichtlich der Trommelbeschaffenheit kann es beispielsweise Unterschiede hinsichtlich der Farbe und/oder der Reflexionseigenschaften der Auflagefläche der Reifenaufbautrommel geben. Ferner können sich die eingesetzten Materialstreifen hinsichtlich ihrer Farbe und ihrer Reflexionseigenschaften voneinander unterscheiden. Aufgrund der unterschiedlichen Lichtverhältnisse in den Fertigungsstätten kann es zu voneinander abweichenden Beleuchtungszuständen und/oder Spiegelungs- und/oder Reflexionseffekten kommen. Diese unterschiedlichen Randbedingungen führen bei kamerabasierten Prüfsystemen zu Fehlern bei der Erfassung der Materiallagen und der Erfassung des Kantenverlaufs.

Die der Erfindung zugrundeliegende Aufgabe besteht somit darin, die automatisierte Materialstreifenüberprüfung beim Aufbau eines Reifenteils dahingehend zu verbessern, dass die Prüfung unabhängig von Umgebungseinflüssen und Randparametern in der Fertigungsstätte mit einer möglichst geringen Fehlerquote bei der Erfassung der Materiallagen und/oder der Erfassung eines Kantenverlaufs erfolgt.

Die Aufgabe wird gelöst durch Prüfsystem der eingangs genannten Art, wobei die elektronische Datenverarbeitungseinrichtung des erfindungsgemäßen Prüfsystems dazu eingerichtet ist, die von der Bildaufnahmeeinrichtung erzeugte Bildaufnahme zum Ermitteln der Eigenschaft des Materialstreifens mittels eines auf maschinellem Lernen basierenden Algorithmus auszuwerten.

Der elektronischen Datenverarbeitungseinrichtung steht somit ein auf maschinellem Lernen basierender Algorithmus zur Bildauswertung zur Verfügung. Im Vergleich zu einem Prüfsystem, welches die Bildaufnahmen einer Bildaufnahmeeinrichtung mittels herkömmlicher Bildverarbeitung auswertet, kann durch den Einsatz eines auf maschinellem Lernen basierenden Algorithmus eine wesentlich geringere Fehlerquote bei der automatisierten Materialstreifenüberprüfung realisiert werden, da der auf maschinellem Lernen basierende Algorithmus mit unterschiedlichen Randbedingungen in den Fertigungsstätten und variierenden Umgebungseinflüssen zurechtkommt. Der Einfluss von unterschiedlichen Lichtverhältnissen, Trommelbeschaffenheiten und/oder Materialbeschaffenheiten auf die Bildeigenschaften sind dem auf maschinellem Lernen basierenden Algorithmus durch ein erfolgtes Lerntraining bekannt, sodass entsprechende Randparameter und Umgebungseinflüsse nicht zu einer erhöhten Fehlerquote bei der Erfassung von Materiallagen und/oder der Erfassung eines Kantenverlaufs führen.

Das Prüfsystem kann auch mehrere Bildaufnahmeeinrichtungen aufweisen. Die eine oder die mehreren Bildaufnahmeeinrichtungen können beispielsweise Kameras sein. Das Prüfsystem arbeitet in diesem Fall kamerabasiert. Zum Ermitteln der Eigenschaft des Materialstreifens kann die elektronische Datenverarbeitungseinrichtung auch mehrere Bildaufnahmen der Bildaufnahmeeinrichtung auswerten. Die eine oder die mehreren Bildaufnahmeeinrichtungen sind vorzugsweise auf die Reifenaufbautrommel ausgerichtet, wobei der Aufnahmebereich der Bildaufnahmeeinrichtungen über eine Beleuchtungseinrichtung des Prüfsystems beleuchtet sein kann.

Das erfindungsgemäße Prüfsystem erlaubt aufgrund der Verwendung eines auf maschinellem Lernen basierenden Algorithmus eine Materialstreifenüberprüfung mit einer geringen Fehlerquote, sodass manuelle Eingriffe nur noch in Ausnahmefällen erforderlich sind. Ferner kommt es zu keiner wesentlichen Verlängerung der Zykluszeiten durch die Verwendung des auf maschinellem Lernen basierenden Algorithmus.

In einer bevorzugten Ausführungsform des erfindungsgemäßen Prüfsystems ist der von der elektronischen Datenverarbeitungseinrichtung zum Ermitteln der Eigenschaft des Materialstreifens verwendete Algorithmus ein auf einem künstlichen neuronalen Netz basierender Algorithmus. Der von der elektronischen Datenverarbeitungseinrichtung auf maschinellem Lernen basierende Algorithmus basiert folglich auf einem Auswertungsmodell, welches durch einen Lernvorgang künstlich erzeugt wurde. Der auf maschinellem Lernen basierende Algorithmus ist also ein Deep-Learning-Algorithmus.

Erfindungsgemäß umfasst der von der elektronischen Datenverarbeitungseinrichtung zum Ermitteln der Eigenschaft des Materialstreifens verwendete Algorithmus einen auf maschinellem Lernen basierenden Kantensegmentierungsalgorithmus. Erfindungsgemäß ist die elektronische Datenverarbeitungseinrichtung dazu eingerichtet, den Kantenverlauf des auf der Reifenaufbautrommel positionierten Materialstreifens mittels des Kantensegmentierungsalgorithmus zu ermitteln. Der Kantensegmentierungsalgorithmus dient vorzugsweise zur Erfassung von seitlichen Längskanten des Materialstreifens. Die Datenverarbeitungseinrichtung kann ferner dazu eingerichtet sein, auf Grundlage des erfassten Kantenverlaufs die Breite und/oder die Geometrie des Materialstreifens zu erfassen und/oder die Lage und/oder Ausrichtung des Materialstreifens auf der Reifenaufbautrommel zu erfassen.

In einer anderen bevorzugten Ausführungsform des erfindungsgemäßen Prüfsystems ist der Kantensegmentierungsalgorithmus ein auf Grundlage von Materialstreifenkanten wiedergebenden und mit einer Kantenmarkierung versehenen Trainingsbildaufnahmen trainierter Algorithmus. Die Trainingsbildaufnahmen, mit welchen der Kantensegmentierungsalgorithmus trainiert ist, zeigen vorzugsweise Kantenverläufe bei unterschiedlichen Randbedingungen und/oder Umgebungseinflüssen. Die Trainingsbildaufnahmen zeigen also beispielsweise Kantenverläufe bei unterschiedlichen Lichtverhältnissen und/oder unterschiedlichen Materialbeschaffenheiten der Materialstreifen. Die Kantenmarkierungen der Trainingsbildaufnahmen können manuell gesetzt worden sein, sodass der Kantensegmentierungsalgorithmus über die manuell gesetzten Kantenmarkierungen trainiert werden konnte. Die Trainingsbildaufnahmen können echte Bildaufnahmen sein oder künstlich erzeugt worden sein. Die künstlich erzeugten Bildaufnahmen können durch eine Manipulation der echten Bildaufnahmen erzeugt worden sein. Durch die künstlich erzeugten Bildaufnahmen wird die Datenmenge für das maschinelle Lernen, also für das Trainieren des Kantensegmentierungsalgorithmus, künstlich vergrößert.

In einer anderen bevorzugten Ausführungsform des erfindungsgemäßen Prüfsystems ist der Kantensegmentierungsalgorithmus ein auf Grundlage von Materialstreifenkanten wiedergebenden und mit einer Kantenmarkierung versehenen Validierungsbildaufnahmen validierter Algorithmus. Der von der elektronischen Datenverarbeitungseinrichtung verwendete Algorithmus hat also einen Validierungsprozess durchlaufen, über welchen die antrainierten Segmentierungsroutinen validiert worden sind. Alternativ oder zusätzlich kann der Kantensegmentierungsalgorithmus ein auf Grundlage von Materialstreifenkanten wiedergebenden und mit einer Kantenmarkierung versehenen Testbildaufnahmen hinsichtlich seiner Kantenerfassungsgenauigkeit getesteter Algorithmus sein. Durch einen Test des Kantensegmentierungsalgorithmus hinsichtlich seiner Kantenerfassungsgenauigkeit kann dem Kantensegmentierungsalgorithmus beispielsweise ein Genauigkeitskennwert zugeordnet werden, über welchen die Kantenerfassungsgenauigkeit bezeichnet werden kann. Die Validierungsbildaufnahmen und/oder die Testbildaufnahmen zeigen Kantenverläufe bei unterschiedlichen Randbedingungen. Die Validierungsbildaufnahmen und/oder die Testbildaufnahmen können erneut echte Bildaufnahmen oder künstlich erzeugte Bildaufnahmen sein. Die künstlich erzeugten Validierungsbildaufnahmen und/oder Testbildaufnahmen können durch eine Manipulation der echten Bildaufnahmen erzeugt worden sein. Durch die künstlich erzeugten Validierungsbildaufnahmen und/oder Testbildaufnahmen wird die Datenmenge für die Validierung und die Genauigkeitserfassung vergrößert.

In einem weiteren bevorzugten Ausführungsbeispiel des erfindungsgemäßen Prüfsystems umfasst der von der elektronischen Datenverarbeitungseinrichtung zum Erfassen der Eigenschaften des Materialstreifens verwendete Algorithmus einen auf maschinellem Lernen basierenden Kantenklassifizierungsalgorithmus. Vorzugsweise ist die elektronische Datenverarbeitungseinrichtung dazu eingerichtet, potentielle Kantenverläufe des auf der Reifenaufbautrommel positionierten Materialstreifens mittels Bildauswertung zu ermitteln und die potentiellen Kantenverläufe zur Identifikation eines spezifischen Kantenverlaufs mittels des Kantenklassifizierungsalgorithmus zu klassifizieren. Wenn also ein Kantenklassifizierungsalgorithmus zum Einsatz kommt, wird zunächst ein potentieller Kantenverlauf durch die elektronische Datenverarbeitungseinrichtung erfasst. Ein potentieller Kantenverlauf kann jedoch lediglich optisch den Eindruck eines Kantenverlaufs erwecken, beispielsweise aufgrund von Lichtreflexionen auf der Oberfläche des Materialstreifens, wobei es sich hierbei um keine echte Materialkante handelt. Der Kantenklassifizierungsalgorithmus erkennt echte Kantenverläufe.

Erfindungsgemäß umfasst der von der elektronischen Datenverarbeitungseinrichtung zum Ermitteln der Eigenschaften des Materialstreifens verwendete Algorithmus einen auf maschinellem Lernen basierenden Streifentypdetektionsalgorithmus. Die elektronische Datenverarbeitungseinrichtung ist erfindungsgemäß dazu eingerichtet, den Streifentyp des auf der Reifenaufbautrommel positionierten Materialstreifens mittel des Streifentypdetektionsalgorithmus zu ermitteln. Der Streifentypdetektionsalgorithmus ist vorzugsweise ein Klassifizierungsalgorithmus. Die elektronische Datenverarbeitungseinrichtung ist vorzugsweise dazu eingerichtet, den Materialstreifen zur Identifikation eines spezifischen Streifentyps mittels des Streifentypdetektionsalgorithmus zu klassifizieren. Beispielsweise ist der Streifentypdetektionsalgorithmus dazu eingerichtet, einen, mehrere oder sämtliche der folgenden Streifentypen zu identifizieren: Innenschicht einer Reifenkarkasse, Textil-Cord-Einlage einer Reifenkarkasse, Umschlag einer Reifenkarkasse, Seitenstreifen einer Reifenkarkasse, Stahl-Cord-Gürtellage eines Gürtelpakets, Spulbandage eines Gürtelpakets und/oder Laufstreifen eines Gürtelpakets.

Die der Erfindung zugrundeliegende Aufgabe wird ferner durch eine Reifenbaumaschine der eingangs genannten Art gelöst, wobei das Prüfsystem der erfindungsgemäßen Reifenbaumaschine nach einer der vorstehend beschriebenen Ausführungsformen ausgebildet ist. Hinsichtlich der Vorteile und Modifikationen der erfindungsgemäßen Reifenbaumaschine wird auf die Vorteile und Modifikationen des erfindungsgemäßen Prüfsystems verwiesen.

Die der Erfindung zugrundeliegende Aufgabe wird ferner durch ein Verfahren der eingangs genannten Art gelöst, wobei die elektronische Datenverarbeitungseinrichtung die von der Bildaufnahmeeinrichtung erzeugten Bildaufnahme zum Ermitteln der Eigenschaft des Materialstreifens mittels eines auf maschinellem Lernen basierenden Algorithmus auswertet. Das erfindungsgemäße Verfahren wird vorzugsweise zum Überprüfen eines auf einer Reifenaufbautrommel positionierten Materialstreifens mittels eines Prüfsystems nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen des erfindungsgemäßen Prüfsystems verwiesen.

In einer bevorzugten Ausführungsform des erfindungsgemäßen Verfahrens wird der Algorithmus basierend auf einem künstlichen neuronalen Netz erzeugt. Vorzugsweise wird das künstliche neuronale Netz während des Trainings mittels einer Vielzahl von Trainingsbildaufnahmen trainiert.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Reifenbaumaschine in einer schematischen Darstellung;
- Fig. 2: einen mit dem erfindungsgemäßen Prüfsystem detektierbaren Kantenverlauf;
- Fig. 3: das Training des von dem erfindungsgemäßen Prüfsystem eingesetzten Algorithmus; und
- Fig. 4: die Erzeugung von auswertbaren Bildaufnahmen in einer schematischen Darstellung.

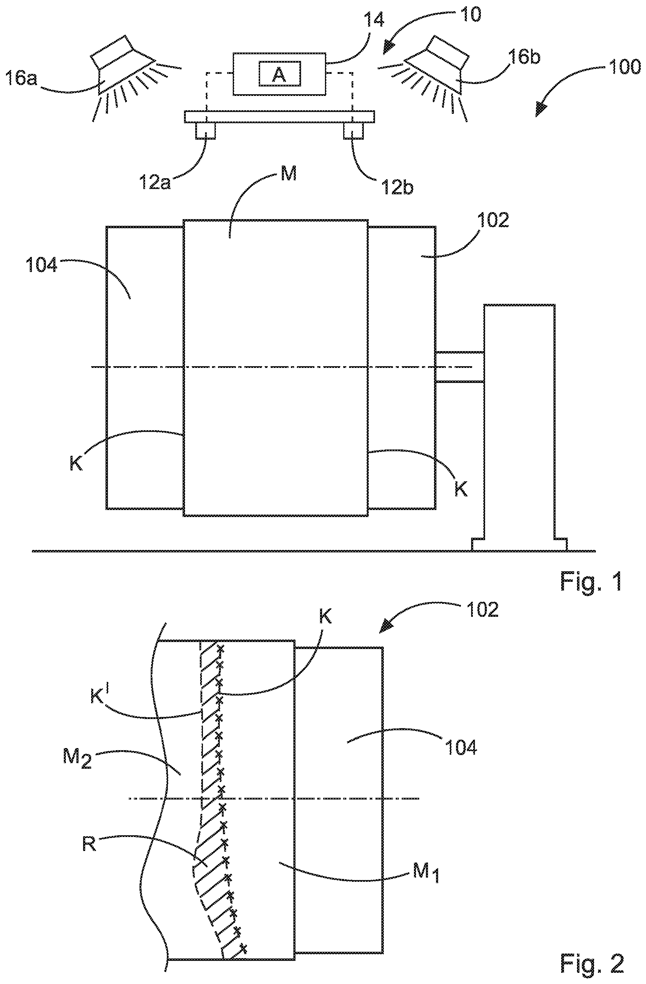

Die Fig. 1 zeigt eine Reifenbaumaschine 100 mit einer Reifenaufbautrommel 102, auf welcher ein Materialstreifen M zum Aufbau eines Reifenteils, nämlich einer Reifenkarkasse oder eines Gürtelpakets, positioniert ist. Die Reifenbaumaschine 100 weist ferner ein Prüfsystem 10 auf, mittels welchem der auf der Trommelfläche 104 der Reifenaufbautrommel 102 positionierte Materialstreifen M überprüft werden kann. Ferner können mit dem Prüfsystem 10 auch weitere Materialstreifen, welche im weiteren Reifenbauprozess auf den dargestellten Materialstreifen M aufgelegt werden, überprüft werden.

Wenn die Reifenbaumaschine 100 eine Maschine ist, mit welcher die Reifenkarkasse aufgebaut wird, können mit dem Prüfsystem 10 die Innenschicht, die Textil-Cord-Einlage, der Umschlag und/oder die Seitenstreifen überprüft werden. Wenn die Reifenbaumaschine 100 eine Maschine zum Aufbau eines Gürtelpakets ist, können mittels des Prüfsystems 10 Stahl-Cord-Gürtellagen, die Spulbandage und/oder der Laufstreifen überprüft werden.

Das Prüfsystem 10 weist mindestens eine, vorliegend zwei als Kamera ausgebildete Bildaufnahmeeinrichtungen 12a, 12b auf, mittels welchen Bildaufnahmen des auf der Reifenaufbautrommel 102 positionierten Materialstreifens M erzeugt werden können. Der Aufnahmebereich der Bildaufnahmeeinrichtungen 12a, 12b wird über Beleuchtungseinrichtungen 16a, 16b des Prüfsystems 10 beleuchtet.

Ferner umfasst das Prüfsystem 10 eine elektronische Datenverarbeitungseinrichtung 14, mittels welcher auf Grundlage der von den Bildaufnahmeeinrichtungen 12a, 12b erzeugten Bildaufnahmen Eigenschaften des auf der Reifenaufbautrommel 102 positionierten Materialstreifens M ermittelt werden können. Beispielsweise kann die elektronische Datenverarbeitungseinrichtung 14 den Streifentyp des Materialstreifens M und die Kantenverläufe K des Materialstreifens M erfassen. Über die Kantenverlaufserfassung kann die elektronische Datenverarbeitungseinrichtung 14 ferner die Materialstreifenbreite und die Ausrichtung des Materialstreifens M auf der Reifenaufbautrommel 102 ermitteln.

Die elektronische Datenverarbeitungseinrichtung 14 ist dazu eingerichtet, die von den Bildaufnahmeeinrichtungen 12a, 12b erzeugten Bildaufnahmen zum Ermitteln des Streifentyps und der Kantenverläufe K des Materialstreifens M mittels eines auf maschinellem Lernen basierenden Algorithmus A auszuwerten. Der von der elektronischen Datenverarbeitungseinrichtung 14 verwendete Algorithmus A ist ein auf einem künstlichen neuronalen Netz basierender Algorithmus A. Der verwendete Algorithmus A beruht also auf Trainingsdaten, aus welchen der Algorithmus A Muster und Gesetzmäßigkeiten zur Streifentyperkennung und zur Kantenverlaufserkennung abgeleitet hat.

Der verwendete Algorithmus A umfasst einen auf maschinellem Lernen basierenden Kantensegmentierungsalgorithmus, wobei die Datenverarbeitungseinrichtung 14 dazu eingerichtet ist, den Kantenverlauf des auf der Reifenaufbautrommel 102 positionierten Materialstreifens M mittels des Kantensegmentierungsalgorithmus zu ermitteln. Der von der elektronischen Datenverarbeitungseinrichtung 14 verwendete Algorithmus kann ferner einen auf maschinellem Lernen basierenden Kantenklassifizierungsalgorithmus umfassen. In diesem Fall werden zunächst potentielle Kantenverläufe des auf der Reifenaufbautrommel 102 positionierten Materialstreifens M mittels Bildauswertung ermittelt, bevor die elektronische Datenverarbeitungseinrichtung 14 mittels des Kantenklassifizierungsalgorithmus die potentiellen Kantenverläufe zur Identifikation eines gesuchten Kantenverlaufs mittels des Kantenklassifizierungsalgorithmus klassifiziert.

Darüber hinaus umfasst der elektronischen Datenverarbeitungseinrichtung 14 verwendete Algorithmus A einen auf maschinellem Lernen basierenden Streifentypdetektionsalgorithmus, wobei die elektronische Datenverarbeitungseinrichtung 14 dazu eingerichtet ist, den Streifentyp des auf der Reifenaufbautrommel 102 positionierten Materialstreifens M mittels des Streifentypdetektionsalgorithmus zu ermitteln. Die elektronische Datenverarbeitungseinrichtung 14 verwendet einen auf maschinellem Lernen basierenden Algorithmus A, da die herkömmliche Bildverarbeitung nicht ausreichend tolerant gegenüber Umgebungseinflüssen und variierenden Randparametern, wie beispielsweise sich ändernde Lichtverhältnisse, ist. Lichtreflexionen, die Materialbeschaffenheit und/oder die Trommelbeschaffenheit führen bei Prüfsystemen, welche auf einer herkömmlichen Bildverarbeitung beruhen, zu einer vergleichsweise hohen Fehlerquote bei der Streifentyp- und Kantenverlaufserkennung, sodass vergleichsweise häufig manuelle Eingriffe erforderlich sind.

Die Fig. 2 zeigt zwei Materialstreifen M₁, M₂, welche auf einer Reifenaufbautrommel 102 einer Reifenbaumaschine 100 positioniert sind. Der Materialstreifen M₁ befindet sich direkt auf der Trommelfläche 104. Der Materialstreifen M₂ befindet sich oberhalb des Materialstreifens M₁. Aufgrund von ungünstigen Lichtverhältnissen ergibt sich auf der Oberfläche des Materialstreifens M₂ eine Lichtreflexion R. Aufgrund der Lichtreflexion R ist eine zuverlässige Kantenverlaufserfassung mit herkömmlicher Bildverarbeitung nicht möglich. Bei einer Auswertung von Bildaufnahmen des dargestellten Trommelbereichs besteht bei Verwendung von herkömmlicher Bildauswertung ein hohes Risiko, dass die Kante K' der Lichtreflexion R als Materialkante erfasst wird. Diese fehlerhafte Kantenerfassung würde entweder zu einer Unterbrechung des automatisierten Reifenbauprozesses führen oder, wenn der Reifenbauprozess basierend auf den fehlerhaften Kantenverlaufsdaten fortgesetzt wird, zu der Produktion eines mangelhaften Reifenteils, beispielsweise einer mangelhaften Karkasse oder eines mangelhaften Gürtelpakets, führen.

Durch die Verwendung eines auf maschinellem Lernen basierenden Algorithmus A wird das Risiko einer fehlerhaften Kantenerfassung deutlich verringert oder sogar eliminiert. Mittels des Algorithmus A kann der Kantenverlauf K des Materialstreifens M₂ entweder direkt oder indirekt ermittelt werden.

Bei der direkten Ermittlung des Kantenverlaufs K wird ein Kantensegmentierungsalgorithmus und Material Klassifizierungsalgorithmus eingesetzt, welche zuvor auf Grundlage von Trainingsbildaufnahmen B_{T} trainiert wurden. Die Trainingsbildaufnahmen B_{T} zeigen Materialstreifenkanten und sind mit einer Kantenmarkierung versehen und zeigen Kantenverläufe bei unterschiedlichen Randbedingungen. Der auf maschinellem Lernen basierende Algorithmus A hat aus den Trainingsbildaufnahmen B_{T} Muster und Gesetzmäßigkeiten für die direkte Kantenerfassung abgeleitet.

Bei der indirekten Kantenerfassung wird zunächst mittels herkömmlicher Bildverarbeitung ein potentieller Kantenverlauf K ermittelt. Mittels eines Klassifizierungs-Algorithmus identifiziert die elektronische Datenverarbeitungseinrichtung 14 dann den gesuchten Materialkantenverlauf K, sodass eine Kantenfehldetektion vermieden wird.

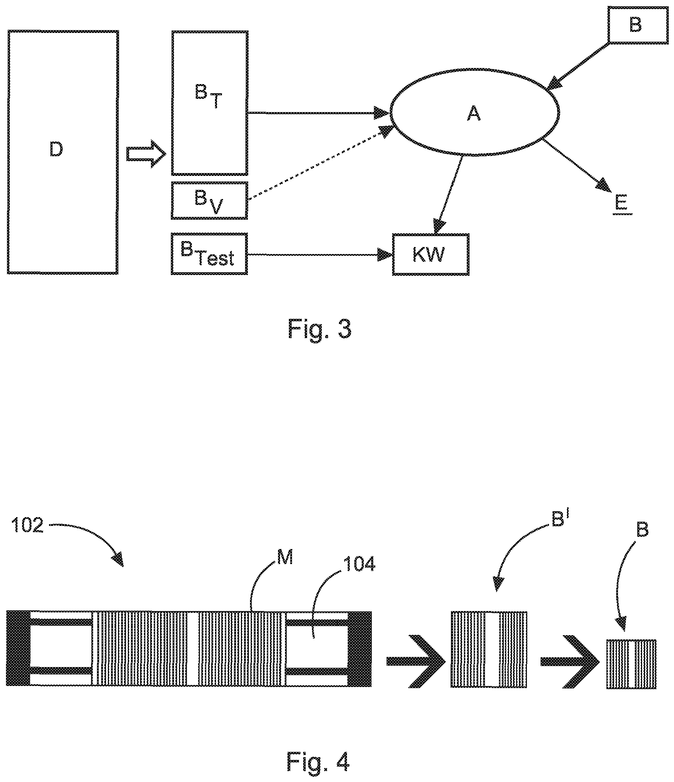

Die Fig. 3 zeigt die konzeptionelle Idee des Trainings des Algorithmus A. Dem Algorithmus A wird ein Datensatz D zugrunde gelegt, wobei der Datensatz D Bildaufnahmen von Kantenverläufen bei unterschiedlichen Randbedingungen und Umgebungseinflüssen umfasst. Die Bildaufnahmen des Datensatzes D können echte Bildaufnahmen oder künstlich erzeugte Bildaufnahmen sein. Die künstlich erzeugten Bildaufnahmen können durch Manipulation der echten Bildaufnahmen erzeugt worden sein, sodass eine große Datenmenge für das maschinelle Lernen zur Verfügung gestellt wird. Die Bildaufnahmen zeigen Materialstreifenkanten und sind mit einer Kantenmarkierung versehen. Die Kantenmarkierung kann eine Mehrzahl von Kantenpräsenzpunkten umfassen, welche manuell zum Zwecke des Algorithmustrainings gesetzt wurden.

Der Datensatz D wird zunächst in Trainingsbildaufnahmen B_{T}, Validierungsbildaufnahmen Bv und Testbildaufnahmen B_{Test} aufgeteilt.

Mittels der Materialstreifenkanten wiedergebenden und mit einer Kantenmarkierung versehenen Trainingsbildaufnahmen B_{T} wird der Algorithmus A zum Zwecke einer präzisieren und sichereren Kantenerfassung trainiert. Mittels der Validierungsbildaufnahmen Bᵥ wird der mittels der Trainingsbildaufnahmen B_{T} trainierte Algorithmus A validiert. Die Testbildaufnahmen B_{Test} werden zum Ableiten eines Kennwerts KW genutzt, wobei der Kennwert KW die Kantenerfassungsgenauigkeit des Algorithmus A beschreibt.

Der trainierte, validierte und getestete Algorithmus A kann dann in einer elektronischen Datenverarbeitungseinrichtung 14 eines Prüfsystems 10 zur Erfassung von Eigenschaften E eines auf einer Reifenaufbautrommel 102 positionierten Materialstreifens M eingesetzt werden. Hierzu wertet die elektronische Datenverarbeitungseinrichtung 14 eine oder mehrere Bildaufnahmen B mittels des auf maschinellem Lernen basierenden Algorithmus A zum Ermitteln von Eigenschaften E eines Materialstreifens M aus. Die Eigenschaften E können beispielsweise den Kantenverlauf der Seitenkanten des Materialstreifens M betreffen.

Die Fig. 4 zeigt, dass die durch den Algorithmus A ausgewerteten Bildaufnahmen B vor der eigentlichen Auswertung noch modifiziert werden können. Zunächst wird eine Bildaufnahme B' von einem Teilbereich eines Materialstreifens M erzeugt, wobei der Materialstreifen M auf der Trommelfläche 104 einer Reifenaufbautrommel 102 positioniert ist. Vor der eigentlichen Auswertung durch den Algorithmus A wird die Bildaufnahme B' skaliert oder geschnitten, um dem Algorithmus A eine Bildaufnahme in einem vorgegebenen Bildformat und/oder mit einer vorgegebenen Bildauflösung zur Verfügung zu stellen.

### Bezugszeichenliste

- 10: Prüfsystem
- 12a, 12b: Bildaufnahmeeinrichtungen
- 14: Datenverarbeitungseinrichtung
- 16a,16b: Beleuchtungseinrichtungen

- 100: Reifenbaumaschine
- 102: Reifenaufbautrommel
- 104: Trommelfläche

- A: Algorithmus
- B, B': Bildaufnahme
- B_{T}: Trainingsbildaufnahmen
- Bv: Validierungsbildaufnahmen
- B_{Test}: Testbildaufnahmen
- D: Datensatz
- E: Eigenschaft
- M, M₁, M₂: Materialstreifen
- K: Kantenverlauf
- K': potentieller Kantenverlauf
- KW: Kennwert
- R: Lichtreflexion

## Patentansprüche

1. Prüfsystem (10) zum Überprüfen eines auf einer Reifenaufbautrommel (102) positionierten Materialstreifens (M, M₁, M₂), mit
- einer Bildaufnahmeeinrichtung (12a, 12b), welche dazu eingerichtet ist, zumindest eine Bildaufnahme (B, B') eines auf einer Reifenaufbautrommel (102) positionierten Materialstreifens (M, M₁, M₂) zu erzeugen; und
- einer elektronischen Datenverarbeitungseinrichtung (14), welche dazu eingerichtet ist, auf Grundlage der von der Bildaufnahmeeinrichtung (12a, 12b) erzeugten Bildaufnahme (B, B') zumindest eine Eigenschaft (E) des auf der Reifenaufbautrommel (102) positionierten Materialstreifens (M, M₁, M₂) zu ermitteln;
**dadurch gekennzeichnet, dass** die elektronische Datenverarbeitungseinrichtung (14) dazu eingerichtet ist, die von der Bildaufnahmeeinrichtung (12a, 12b) erzeugte Bildaufnahme (B, B') zum Ermitteln der Eigenschaft (E) des Materialstreifens (M, M₁, M₂) mittels eines auf maschinellem Lernen basierenden Algorithmus (A) auszuwerten,
wobei der von der elektronischen Datenverarbeitungseinrichtung (14) zum Ermitteln der Eigenschaft (E) des Materialstreifens (M, M₁, M₂) verwendete Algorithmus (A) einen auf maschinellem Lernen basierenden Kantensegmentierungsalgorithmus umfasst und die elektronische Datenverarbeitungseinrichtung (14) dazu eingerichtet ist, den Kantenverlauf (K) des auf der Reifenaufbautrommel (102) positionierten Materialstreifens (M, M₁, M₂) mittels des Kantensegmentierungsalgorithmus zu ermitteln, und
wobei der von der elektronischen Datenverarbeitungseinrichtung (14) zum Ermitteln der Eigenschaft (E) des Materialstreifens (M, M₁, M₂) verwendete Algorithmus (A) einen auf maschinellem Lernen basierenden Streifentypdetektionsalgorithmus umfasst und die elektronische Datenverarbeitungseinrichtung (14) dazu eingerichtet ist, den Streifentyp des auf der Reifenaufbautrommel (102) positionierten Materialstreifens (M, M₁, M₂) mittels des Streifentypdetektionsalgorithmus zu ermitteln.

2. Prüfsystem (10) nach Anspruch 1,
**dadurch gekennzeichnet, dass** der von der elektronischen Datenverarbeitungseinrichtung (14) zum Ermitteln der Eigenschaft (E) des Materialstreifens (M, M₁, M₂) verwendete Algorithmus (A) ein auf einem künstlichen neuronalen Netz basierender Algorithmus (A) ist.

3. Prüfsystem (10) nach einem der Ansprüche 1 oder 2,
**dadurch gekennzeichnet, dass** der Kantensegmentierungsalgorithmus ein auf Grundlage von Materialstreifenkanten wiedergebenden und mit einer Kantenmarkierung versehenen Trainingsbildaufnahmen (B_{T}) trainierter Algorithmus (A) ist.

4. Prüfsystem (10) nach einem der Ansprüche 1 bis 3,
**dadurch gekennzeichnet, dass** der Kantensegmentierungsalgorithmus
- ein auf Grundlage von Materialstreifenkanten wiedergebenden und mit einer Kantenmarkierung versehenen Validierungsbildaufnahmen (Bv) validierter Algorithmus (A) ist; und/oder
- ein auf Grundlage von Materialstreifenkanten wiedergebenden und mit einer Kantenmarkierung versehenen Testbildaufnahmen (B_{Test}) hinsichtlich seiner Kantenerfassungsgenauigkeit getesteter Algorithmus (A) ist.

5. Prüfsystem (10) nach einem der vorstehenden Ansprüche,
**dadurch gekennzeichnet, dass** der von der elektronischen Datenverarbeitungseinrichtung (14) zum Ermitteln der Eigenschaft (E) des Materialstreifens (M, M₁, M₂) verwendete Algorithmus (A) einen auf maschinellem Lernen basierenden Kantenklassifizierungsalgorithmus umfasst und die elektronische Datenverarbeitungseinrichtung (14) dazu eingerichtet ist, potentielle Kantenverläufe des auf der Reifenaufbautrommel (102) positionierten Materialstreifens (M, M₁, M₂) mittels Bildauswertung zu ermitteln und die potentiellen Kantenverläufe (K) zur Identifikation eines, dem Material zugehörigen Kantenverlaufs (K) mittels des Kantenklassifizierungsalgorithmus zu klassifizieren.

6. Reifenbaumaschine (100), mit
- einer Reifenaufbautrommel (102), auf welcher Materialstreifen (M, M₁, M₂) zum Aufbau eines Reifenteils, insbesondere zum Aufbau einer Reifenkarkasse oder eines Gürtelpakets, positionierbar sind; und
- einem Prüfsystem (10) zum Überprüfen der auf der Reifenaufbautrommel (102) positionierten Materialstreifen (M, M₁, M₂);
**dadurch gekennzeichnet, dass** das Prüfsystem (10) nach einem der vorstehenden Ansprüche ausgebildet ist.

7. Verfahren zum Überprüfen eines auf einer Reifenaufbautrommel (102) einer Reifenbaumaschine (100) positionierten Materialstreifens (M, M₁, M₂) mittels eines Prüfsystems (10), nach einem der Ansprüche 1 bis 5, mit den Schritten:
- Erzeugen zumindest einer Bildaufnahme (B, B') eines auf einer Reifenaufbautrommel (102) positionierten Materialstreifens (M, M₁, M₂) mittels einer Bildaufnahmeeinrichtung (12a, 12b) des Prüfsystems (10); und
- Ermitteln zumindest einer Eigenschaft (E) des auf der Reifenaufbautrommel (102) positionierten Materialstreifens (M, M₁, M₂) auf Grundlage der von der Bildaufnahmeeinrichtung (12a, 12b) erzeugten Bildaufnahme (B, B') mittels einer elektronischen Datenverarbeitungseinrichtung (14) des Prüfsystems (10);
**dadurch gekennzeichnet, dass** die elektronische Datenverarbeitungseinrichtung (14) die von der Bildaufnahmeeinrichtung (12a, 12b) erzeugte Bildaufnahme (B, B') zum Ermitteln der Eigenschaft (E) des Materialstreifens (M, M₁, M₂) mittels eines auf maschinellem Lernen basierenden Algorithmus (A) auswertet.

8. Verfahren nach Anspruch 7,
**gekennzeichnet durch** den Schritt:
- Erzeugen des Algorithmus (A) basierend auf einem künstlichen neuronalen Netz;
wobei der Algorithmus (A) während des Erzeugens vorzugsweise mittels einer Vielzahl von Trainingsbildaufnahmen (B_{T}) trainiert wird.

## Claims

1. Checking system (10) for checking a material strip (M, M₁, M₂) positioned on a tyre-building drum (102), comprising
- an image-recording device (12a, 12b), which is designed to generate at least one image recording (B, B') of a material strip (M, M₁, M₂) positioned on a tyre-building drum (102); and
- an electronic data-processing device (14), which is designed to determine, on the basis of the image recording (B, B') generated by the image-recording device (12a, 12b), at least one property (E) of the material strip (M, M₁, M₂) positioned on the tyre-building drum (102);
**characterized in that** the electronic data-processing device (14) is designed to evaluate the image recording (B, B') generated by the image-recording device (12a, 12b) for determining the property (E) of the material strip (M, M₁, M₂) by means of an algorithm (A) based on machine learning,
wherein the algorithm (A) used by the electronic data-processing device (14) for determining the property (E) of the material strip (M, M₁, M₂) comprises an edge segmentation algorithm based on machine learning and the electronic data-processing device (14) is designed to determine the edge profile (K) of the material strip (M, M₁, M₂) positioned on the tyre-building drum (102) by means of the edge segmentation algorithm, and
wherein the algorithm (A) used by the electronic data-processing device (14) for determining the property (E) of the material strip (M, M₁, M₂) comprises a strip-type detection algorithm based on machine learning and the electronic data-processing device (14) is designed to determine the strip type of the material strip (M, M₁, M₂) positioned on the tyre-building drum (102) by means of the strip-type detection algorithm.

2. Checking system (10) according to Claim 1,
**characterized in that** the algorithm (A) used by the electronic data-processing device (14) for determining the property (E) of the material strip (M, M₁, M₂) is an algorithm (A) based on an artificial neural network.

3. Checking system (10) according to either of Claims 1 and 2,
**characterized in that** the edge segmentation algorithm is an algorithm (A) trained on the basis of training image recordings (B_{T}) reproducing material strip edges and provided with an edge marking.

4. Checking system (10) according to one of Claims 1 to 3,
**characterized in that** the edge segmentation algorithm
- is an algorithm (A) validated on the basis of validation image recordings (Bv) reproducing material strip edges and provided with an edge marking; and/or
- is an algorithm (A) tested with regard to its edge-sensing accuracy on the basis of test image recordings (B_{Test}) reproducing material strip edges and provided with an edge marking.

5. Checking system (10) according to one of the preceding claims,
**characterized in that** the algorithm (A) used by the electronic data-processing device (14) for determining the property (E) of the material strip (M, M₁, M₂) comprises an edge classification algorithm based on machine learning and the electronic data-processing device (14) is designed to determine potential edge profiles of the material strip (M, M₁, M₂) positioned on the tyre-building drum (102) by means of image evaluation and to classify the potential edge profiles (K) for the identification of an edge profile (K) belonging to the material by means of the edge classification algorithm.

6. Tyre-building machine (100), with
- a tyre-building drum (102), on which material strips (M, M₁, M₂) for building a tyre part, in particular for building a tyre carcass or a breaker belt assembly, can be positioned; and
- a checking system (10) for checking the material strips (M, M₁, M₂) positioned on the tyre-building drum (102);
**characterized in that** the checking system (10) is formed according to one of the preceding claims.

7. Method for checking a material strip (M, M₁, M₂) positioned on a tyre-building drum (102) of a tyre-building machine (100) by means of a checking system (10), according to one of Claims 1 to 5, with the steps of:
- generating at least one image recording (B, B') of a material strip (M, M₁, M₂) positioned on a tyre-building drum (102) by means of an image-recording device (12a, 12b) of the checking system (10); and
- determining at least one property (E) of the material strip (M, M₁, M₂) positioned on the tyre-building drum (102) on the basis of the image recording (B, B') generated by the image-recording device (12a, 12b) by means of an electronic data-processing device (14) of the checking system (10);
**characterized in that** the electronic data-processing device (14) evaluates the image recording (B, B') generated by the image-recording device (12a, 12b) for determining the property (E) of the material strip (M, M₁, M₂) by means of an algorithm (A) based on machine learning.

8. Method according to Claim 7,
**characterized by** the step of:
- generating the algorithm (A) on the basis of an artificial neural network;
wherein the algorithm (A) is trained during the generating, preferably by means of a multiplicity of training image recordings (B_{T}).

## Revendications

1. Système de contrôle (10) pour le contrôle d'une bande de matériau (M, M₁, M₂) positionnée sur un tambour de fabrication de pneus (102), comprenant
- un dispositif de capture d'image (12a, 12b), qui est conçu pour générer au moins une capture d'image (B, B') d'une bande de matériau (M, M₁, M₂) positionnée sur un tambour de fabrication de pneus (102) ; et
- un dispositif électronique de traitement de données (14), qui est conçu pour déterminer, sur la base de la capture d'image (B, B') générée par le dispositif de capture d'image (12a, 12b), au moins une propriété (E) de la bande de matériau (M, M₁, M₂) positionnée sur le tambour de fabrication de pneus (102) ;
**caractérisé en ce que** le dispositif électronique de traitement de données (14) est conçu pour évaluer la capture d'image (B, B') générée par le dispositif de capture d'image (12a, 12b) afin de déterminer la propriété (E) de la bande de matériau (M, M₁, M₂) au moyen d'un algorithme (A) basé sur l'apprentissage automatique,
l'algorithme (A) utilisé par le dispositif électronique de traitement de données (14) pour déterminer la propriété (E) de la bande de matériau (M, M₁, M₂) comprenant un algorithme de segmentation de contours basé sur l'apprentissage automatique et le dispositif électronique de traitement de données (14) étant conçu pour déterminer le tracé des contours (K) de la bande de matériau (M, M1, M2) positionnée sur le tambour de fabrication de pneus (102) au moyen de l'algorithme de segmentation de contours, et
l'algorithme (A) utilisé par le dispositif électronique de traitement de données (14) pour déterminer la propriété (E) de la bande de matériau (M, M₁, M₂) comprenant un algorithme de détection de type de bande basé sur l'apprentissage automatique et le dispositif électronique de traitement de données (14) étant conçu pour déterminer le type de bande de la bande de matériau (M, M₁, M₂) positionnée sur le tambour de fabrication de pneus (102) au moyen de l'algorithme de détection de type de bande.

2. Système de contrôle (10) selon la revendication 1,
**caractérisé en ce que** l'algorithme (A) utilisé par le dispositif électronique de traitement de données (14) pour déterminer la propriété (E) de la bande de matériau (M, M₁, M₂) est un algorithme (A) basé sur un réseau neuronal artificiel.

3. Système de contrôle (10) selon l'une quelconque des revendications 1 ou 2, **caractérisé en ce que** l'algorithme de segmentation de contours est un algorithme (A) entraîné sur la base de captures d'images d'entraînement (B_{T}) représentant des contours de bande de matériau et pourvues d'un marquage de contour.

4. Système de contrôle (10) selon l'une quelconque des revendications 1 à 3, **caractérisé en ce que** l'algorithme de segmentation de contours
- est un algorithme (A) validé sur la base de captures d'images de validation (Bv) représentant des contours de bande de matériau et pourvues d'un marquage de contour ; et/ou
- est un algorithme (A) testé, quant à sa précision de détection de contours, sur la base de captures d'images de test (B_{Test}) représentant des contours de bande de matériau et pourvues d'un marquage de contour.

5. Système de contrôle (10) selon l'une quelconque des revendications précédentes, **caractérisé en ce que** l'algorithme (A) utilisé par le dispositif électronique de traitement de données (14) pour déterminer la propriété (E) de la bande de matériau (M, M₁, M₂) comprend un algorithme de classification de contours basé sur l'apprentissage automatique et le dispositif électronique de traitement de données (14) est conçu pour déterminer des tracés de contours potentiels de la bande de matériau (M, M₁, M₂) positionnée sur le tambour de fabrication de pneus (102) au moyen d'une évaluation d'image et pour classer les tracés de contours potentiels (K) afin d'identifier un tracé de contour (K) appartenant au matériau au moyen de l'algorithme de classification de contours.

6. Machine de fabrication de pneus (100), comprenant
- un tambour de fabrication de pneus (102), sur lequel des bandes de matériau (M, M₁, M₂) peuvent être positionnées pour la fabrication d'une partie de pneu, en particulier pour la fabrication d'une carcasse de pneu ou d'un paquet de ceinture ; et
- un système de contrôle (10) pour le contrôle des bandes de matériau (M, M₁, M₂) positionnées sur le tambour de fabrication de pneus (102) ;
**caractérisée en ce que** le système de contrôle (10) est réalisé selon l'une quelconque des revendications précédentes.

7. Procédé de contrôle d'une bande de matériau (M, M₁, M₂) positionnée sur un tambour de fabrication de pneus (102) d'une machine de fabrication de pneus (100) au moyen d'un système de contrôle (10) selon l'une quelconque des revendications 1 à 5, comprenant les étapes consistant à :
- générer au moins une capture d'image (B, B') d'une bande de matériau (M, M₁, M₂) positionnée sur un tambour de fabrication de pneus (102) au moyen d'un dispositif de capture d'image (12a, 12b) du système de contrôle (10) ; et
- déterminer au moins une propriété (E) de la bande de matériau (M, M₁, M₂) positionnée sur le tambour de fabrication de pneus (102) sur la base de la capture d'image (B, B') générée par le dispositif de capture d'image (12a, 12b) au moyen d'un dispositif électronique de traitement de données (14) du système de contrôle (10) ;
**caractérisé en ce que** le dispositif électronique de traitement de données (14) évalue la capture d'image (B, B') générée par le dispositif de capture d'image (12a, 12b) afin de déterminer la propriété (E) de la bande de matériau (M, M₁, M₂) au moyen d'un algorithme (A) basé sur l'apprentissage automatique.

8. Procédé selon la revendication 7,
**caractérisé par** l'étape consistant à :
- générer l'algorithme (A) basé sur un réseau neuronal artificiel ;
l'algorithme (A) étant de préférence entraîné au moyen d'une pluralité de captures d'images d'entraînement (B_{T}) pendant la génération.
